# EUROPÄISCHE PATENTANMELDUNG

(11) **EP 3 912 931 A1**
(43) Veröffentlichungstag der Anmeldung: **24.11.2021**
(21) Anmeldenummer: 20175961.0
(22) Anmeldetag: 22.05.2020
(51) Int. Cl.: B65G 15/22, B65G 47/76

(54) **ÜBERFÜHRVORRICHTUNG UND VERFAHREN ZUM ÜBERFÜHREN VON STÜCKGÜTERN ZWISCHEN FÖRDERSTRECKEN**

(71) Anmelder: Siemens Aktiengesellschaft, 80333 München (DE)
(72) Erfinder: FEILKE, Robert, 39122 Magdeburg (DE); HESSE, Karsten, 91183 Abenberg (DE)
(74) Vertreter: Siemens Patent Attorneys

(57) **Zusammenfassung**

Die Erfindung offenbart eine Vorrichtung (2) und ein Verfahren zum Überführen von Stückgütern zwischen zwei benachbarten Förderstrecken (2a,2b). Ein zwischen den Förderstrecken angeordneter Mittelschwenkabweiser (16) und/oder ein oder zwei an den Außenseiten der Förderstrecken angeordnete Außenschwenkabweiser (20) sind um ihre seitlich der Förderstrecken angeordnete Schwenkachsen (18,22) herum zwischen einer ersten und zweiten Überführstellung und einer Durchgangsstellung schwenkbar. In den Überführstellung versperren der oder die Schwenkabweiser (16,20) eine der Förderstrecke (4a,4b) durch eine Anordnung schräg von der Außenseite (10a,10b) in Förderrichtung (6) hin zum Mittelstreifen (14ab), so dass ein Stückgut von der einen auf die andere Förderstrecke (4a,4b) überführt wird. In beiden Überführstellung sind die Schwenkabweiser (16,20) im Wesentlichen auf gleicher Höhe der Förderstrecken (4a,4a) angeordnet. Daher sind Stückgüter auf gleicher Höhe wahlweise von der ersten auf die zweite Förderstrecke (4a,4b) oder umgekehrt überführbar. In der Durchgangsstellung erfolgt keine Beeinflussung eines Stückguts.

## Beschreibung

Die vorliegende Erfindung betrifft Förderanlagen für Stückgüter. Die Erfindung findet zwar besondere Anwendung auf das Überführen von Gepäckstücken auf Flughafen-Gepäckförderanlagen, kann aber auch anderweitig angewandt werden. Hervorzuheben ist insbesondere der Postlogistikbereich mit Paketen und Päckchen.

Stand der Technik für einen Wechsel zwischen Förderstrecken in der Gurtfördertechnik ist ein Bandabweiser (High Speed Diverter), der Stückgüter geradeaus entlang einer Förderstrecke fördert oder von einer ersten auf eine zweite, aufnehmende Förderstrecke (nicht aber umgekehrt) transportiert. Auf der zweiten Förderstrecke muss sich dann ein aufnehmender Förderer befinden. Um in umgekehrter Richtung von der zweiten auf die erste Förderstrecke zu fördern, werden ein weiterer Bandabweiser und ein weiterer aufnehmender Förderer benötigt. Eine komplette Auskreuzung benötigt also zwei Bandabweiser und zwei aufnehmende Förderer, ist daher sehr lange und platzbeanspruchend. Es gibt oft Situationen, in denen diese Lösung nicht oder nur unter Inkaufnahme anderer Probleme, die vornehmlich räumliche Restriktionen in bestehenden Sortieranlagen und Steuerungsrestriktionen betreffen, lösbar ist. Bestehende Lösungen zur Auskreuzung stammen häufig aus dem Hochleistungssortierbereich und sind daher besonders für hohe Geschwindigkeiten optimiert - auch wenn diese hohen Leistungsanforderungen nicht erforderlich sind.

Der vorliegenden Erfindung liegt daher die Aufgabe zugrunde, eine kompaktere und vielseitigere Lösung zur Auskreuzung bereitzustellen. Diese Aufgabe wird durch eine Vorrichtung und ein Verfahren mit den Merkmalen der unabhängigen Ansprüchen gelöst. Vorteilhafte Ausgestaltungen der Erfindung ergeben sich aus den Unteransprüchen.

Die erfindungsgemäße Lösung sieht eine Überführvorrichtung vor. Die Überführvorrichtung umfasst eine erste und eine zweite Förderstrecke jeweils mit einer ersten und einer zweiten Förderrichtung, einer ersten und einer zweiten Innenseite und einer ersten und einer zweite Außenseite, wobei die Förderstrecken in einem Überführbereich nebeneinander mit im Wesentlichen zueinander parallelen Förderrichtungen und durch einen zwischen ihren Innenseiten angeordneten Mittelstreifen voneinander getrennt angeordnet sind. Die Überführvorrichtung umfasst ein oder mehrere Schwenkabweiser mit eigener, seitlich der ersten oder zweiten Förderstrecke angeordneter Schwenkachse, um die herum der Schwenkabweiser schwenkbar ist, wobei der oder die Schwenkabweiser derart angeordnet und ansteuerbar sind, dass die Überführvorrichtung eine erste und eine zweite Überführstellung und eine Durchgangsstellung aufweist. In der ersten bzw. zweiten Überführstellung einer oder mehrere der Schwenkabweiser versperren die erste bzw. zweite Förderstrecke im Überführbereich durch eine Anordnung quer zur Förderrichtung oder schräg von der ersten bzw. zweiten Außenseite in Förderrichtung hin zum Mittelstreifen, so dass ein Stückgut von der ersten bzw. zweiten Förderstrecke auf die zweite bzw. erste Förderstrecke überführt wird, wobei in der ersten und zweiten Überführstellung die Schwenkabweiser im Wesentlichen auf gleicher Höhe der Förderstrecken angeordnet sind, so dass Stückgüter auf gleicher Höhe wahlweise von der ersten auf die zweite bzw. von der zweiten auf die erste Förderstrecke überführbar sind. In der Durchgangsstellung sind einer oder mehrere der Schwenkabweiser parallel zum Mittelstreifen angeordnet, so dass keine Beeinflussung eines Stückguts auf der oder den Förderstrecken erfolgt.

Die Überführvorrichtung umfasst eine Schwenkvorrichtung um den oder die Schwenkabweiser in die Überführstellungen und in die Durchgangsstellung(en) zu schwenken.

Eine seitliche Anordnung beschreibt eine Anordnung an oder auf der Innen- oder Außenseite. Streng genommen weist die Überführvorrichtung für jede Förderstrecke eine eigene Durchgangsstellung auf. Bei nur einem Mittelschwenkabweiser stimmen jedoch die Durchgangsstellungen beider Förderstrecken überein.

Ein Schwenkabweiser ist eine Vorrichtung zum Ablenken eines Stückguts von einer auf die andere Förderstrecke. Dies umfasst sowohl einteilige, in Überführstellung die gesamte Förderstrecke versperrende Schwenkabweiser, als auch mehrteilige, flügelartig agierende Schwenkabweiser, bei der in Überführstellung zwei Schwenkabweiser in kollinear bzw. koplanarer Anordnung die Förderstrecke versperren. Der oder die Schwenkabweiser werden in die erste bzw. zweite Überführstellung derart wahlweise in die erste bzw. zweite Förderstrecke hineingeschwenkt, so dass sie den Stückgutstrom wahlweise von der ersten auf die zweite Förderstrecke bzw. umgekehrt ablenken. In Durchgangsstellung trennen der oder die Schwenkabweiser im Überführbereich die erste und die zweite Förderstrecke voneinander ab oder sind entlang einer der Außenseiten angeordnet. Wenn der Schwenkabweiser in der ersten Überführstellung in den Bereich der ersten Förderstrecke hineingeschwenkt ist, wird ein Stückgut von der ersten auf die zweite Förderstrecke überführt. Wenn der Schwenkabweiser in der zweiten Überführstellung in den Bereich der zweiten Förderstrecke hineingeschwenkt ist, wird ein Stückgut von der zweiten auf die erste Förderstrecke überführt.

Wenn der Schwenkabweiser mehrteilig ist, ist die Schwenkvorrichtung ausgestaltet, die umfassten Teile konzertiert angesteuert zu schwenken und umfasst hierzu einen oder mehrere Motoren zum Antreiben der Schwenkabweiser und allenfalls weitere bewegbare Komponenten.

Der Mittelstreifen kann sowohl eine Mittellinie ohne oder mit kaum einer vertikalen Begrenzung sein oder auch eine bauliche Abgrenzung mit einer Aussparung im Überführbereich aufweisen. Auch die Breite des Mittelstreifens kann variieren.

Unter einer Förderstrecke im Sinne der Erfindung soll insbesondere ein - nicht notwendigerweise durchgehender - Bandförderer verstanden werden. Die Bezeichnungen Innen- und Außenseiten beziehen sich relativ auf die Positionierung der Förderstrecken zueinander, wobei die Bezeichnungen erste und zweite Förderstrecke untereinander austauschbar sind. Unter im Wesentlichen parallelen Förderrichtungen sollen auch nebeneinander angeordnete Förderstrecken mit nicht perfekt geraden Förderrichtungen verstanden werden.

Unter einem Überführen soll ein Wechsel eines Stückguts von einer auf die andere Förderstrecke verstanden werden, also ein Spur- bzw. Linienwechsel. Die Erfindung erlaubt einen wahlweisen Spurwechsel an der gleichen Überführstellung, also auf gleicher Höhe der Förderstrecken, in beide Richtungen.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform können der oder die Schwenkabweiser jeweils ein distales und ein proximales Ende aufweisen und ausgestaltet sein als ein Mittelschwenkabweiser und/oder ein oder zwei Außenschwenkabweiser. Der Mittelschwenkabweiser kann um sein proximales Ende um seine auf dem und im Wesentlichen orthogonal zum Mittelstreifen angeordnete Mittelschwenkachse herum schwenkbar sein. Der oder die Außenschwenkabweiser können um ihre proximalen Enden um ihre auf der und im Wesentlichen orthogonal zur jeweiligen Außenseite angeordnete Außenschwenkachse herum schwenkbar sein. Der oder die Außenschwenkachsen können flussaufwärts oder auf gleicher Höhe von der Mittelschwenkachse angeordnet sein. Das distale Ende von mindestens einem der Schwenkabweiser kann in der ersten bzw. zweiten Überführstellung in die erste bzw. zweite Förderstrecke hinein und in der Durchgangsstellung mindestens einer der Schwenkabweiser parallel zum Mittelstreifen positioniert sein, so dass in der ersten bzw. zweiten Überführstellung ein Stückgut durch den oder die Schwenkabweiser in dem Überführbereich von der ersten auf die zweite Förderstrecke bzw. von der zweiten auf die erste Förderstrecke überführt wird. Die Schwenkvorrichtung kann ausgestaltet sein, den Außenschwenkabweiser gezielt im Wesentlichen gleichzeitig mit dem Mittelschwenkabweiser wahlweise in die Überführstellungen und in die Durchgangsstellung zu schwenken.

Die Außenschwenkachsen sind nicht notwendigerweise auf gleicher Höhe angeordnet, denn ihre ist Positionierung abhängig von der Länge des bzw. der Außenschwenkabweiser, des allfälligen Mittelstreifenschwenkabweisers sowie von der Breite der Förderstrecken.

Gemäß einer Ausführungsform können der Mittelschwenkabweiser und der erste bzw. zweite Außenschwenkabweiser in der ersten bzw. zweiten Überführstellung im Wesentlichen kollinear positioniert sein, so dass ein Stückgut sowohl durch den Mittelschwenkabweiser, als auch durch den Außenschwenkabweiser von seiner (abgebenden) Förderstrecke auf die benachbarte (aufnehmende) Förderstrecke überführt wird. Die Anordnung ist kollinear in der Aufsicht bzw. quer zur Förderfläche koplanar.

Wenn mehr als zwei Förderstrecken benachbart angeordnet sind, kann der Außenschwenkabweiser als ein weiterer Mittelschwenkabweiser agieren, eine der Außenseiten einer Förderstrecke ist dann eine weitere Innenseite.

Geringe Schwenkzeiten und somit hohe Durchsätze werden erzielt mit möglichst kleinen Schwenkwinkeln und möglichst kurzen Schwenkabweisern. Der Schwenkwinkel ist der von Innen- bzw. Außenseiten der jeweiligen Förderstrecken und demjenigen Schwenkabweiser eingeschlossene Winkel, den der (Außenseiten- bzw. Mittelstreifen-)Schwenkabweiser zwischen Durchgangs- und Überführstellung überstreicht. Ebenso wie die Breite der Förderstrecke und die Längen der Schwenkabweiser können die Schwenkwinkel voneinander abweichen. Es ist ein Kompromiss zu finden zwischen möglichst kurzen Schwenkabweisern, die eine geringere Trägheit als längere Schwenkabweiser aufweisen, der Notwendigkeit einer konzertierten Ansteuerung mit mehr als einem Motor wenn je zwei Schwenkabweiser flügelartig eine Förderstrecke absperren und der Möglichkeit eines kürzeren Gutabstands bei zwei Schwenkabweisern. Bei zwei die Förderstrecke versperrenden Schwenkabweisern ist der Schwenkwinkel im Wesentlichen gleich, allerdings muss für das Schwenken eine geringere Fläche freigehalten werden, so dass höhere Sortierleistungswerte erzielt werden können. Mittelschwenkachsen sind auf gleicher Höhe oder stromabwärts von den Außenschwenkachsen angeordnet

In den Überführstellungen sind jeweils ein Außenschwenkabweiser und ein Mittelschwenkabweiser kollinear bzw. koplanar angeordnet. In der Durchgangsstellung ist der Mittelschwenkabweiser auf und entlang dem Mittelstreifen angeordnet und trennt die beiden Förderstrecken - in Abhängigkeit von der Länge des Mittelschwenkabweisers im Überführbereich vollständig oder nur teilweise ab.

Gemäß einer Ausführungsform können der oder die Schwenkabweiser, insbesondere der Mittelschwenkabweiser und/oder der oder die Außenschwenkabweiser, antreibbare Ablenkflächen, beispielsweise als umlaufende Gurte, aufweisen und die Schwenkvorrichtung ist ausgestaltet, diese Ablenkflächen anzutreiben, vorzugsweise mit einer an die Fördergeschwindigkeit der Förderstrecken angepassten Überführgeschwindigkeit und vorzugsweise während der oder die Schwenkabweiser in den Überführstellungen positioniert sind und/oder dorthin geschwenkt werden. Das Überführen ist somit besonders gutschonend, eine Stauung wird vermieden.

Gemäß einer Ausführungsform können die Förderstrecken im Überführbereich eine ebene oder eine nur entlang den Förderrichtungen geneigte Förderfläche ausbilden. So muss zum Überführen nicht gegen die Schwerkraft gearbeitet werden, keine der Überführrichtungen ist bevorzugt und ein unbeabsichtigter Linienwechsel wird vermieden.

Um das Überführen zu unterstützen, kann die Überführvorrichtung ein auf dem Mittelstreifen im Überführbereich angeordnetes, aktiv antreibbares oder passives Fördermittel umfassen, welches ausgestaltet ist, das Überführen zwischen den Förderstrecken zu erleichtern. Ein aktiv antreibbares Fördermittel wird in Abhängigkeit von der Position der Schwenkachsen angetrieben - in der ersten Überführstellung von der ersten in Richtung der zweiten Förderstrecke, in der zweiten Überführstellung in umgekehrter Richtung. Fördermittel können beispielsweise Kugeln, Rollen oder Bänder sein.

Gemäß einer Ausführungsform kann die Überführvorrichtung zudem umfassen eine weitere Förderstrecke mit einer weiteren Förderrichtung, einer weiteren Innenseite und einer weiteren Außenseite, wobei die weitere Förderstrecke in einem weiteren Überführbereich neben der zweiten Förderstrecke mit im Wesentlichen zueinander parallelen Förderrichtungen und durch einen zwischen der zweiten Außenseite und der weiteren Innenseite angeordneten weiteren Mittelstreifen voneinander getrennt angeordnet sind. Die Überführvorrichtung kann umfassen einen oder mehrere weitere Schwenkabweiser mit eigener, seitlich der weiteren Förderstrecke angeordneter weiterer Schwenkachse, um die herum der oder die weiteren Schwenkabweiser schwenkbar sind, wobei der oder die weiteren Schwenkabweiser derart angeordnet und ansteuerbar sind, dass die Überführvorrichtung eine zweite weitere und/oder eine weitere Überführstellung aufweist. In der zweiten weiteren bzw. in der weiteren Überführstellung kann der eine oder mehrere weitere Schwenkabweiser die zweite bzw. die weitere Förderstrecke im weiteren Überführbereich versperren durch eine Anordnung quer zur Förderrichtung oder schräg zwischen der zweiten Innenseite bzw. der weiteren Außenseite in Förderrichtung hin zum weiteren Mittelstreifen, so dass ein Stückgut von der zweiten bzw. weiteren Förderstrecke auf die weitere bzw. zweite Förderstrecke überführt wird, wobei in der zweiten weiteren und der weiteren Überführstellung die weiteren Schwenkabweiser im Wesentlichen auf gleicher Höhe der Förderstrecken angeordnet sein können, so dass Stückgüter auf gleicher Höhe wahlweise von der zweiten auf die weitere bzw. von der weiteren auf die zweite Förderstrecke überführbar sind. In der Durchgangsstellung kann einer oder mehrere der weiteren Schwenkabweiser parallel zum weiteren Mittelstreifen angeordnet sein, so dass keine Beeinflussung eines Stückguts auf den Förderstrecken erfolgt. Die Schwenkvorrichtung kann ausgestaltet sein, den oder die weiteren Schwenkabweiser in die weiteren Überführstellungen und in die Durchgangsstellung zu schwenken.

Anzumerken ist, dass die weitere Förderstrecke auf beiden Seiten der bestehenden Förderstrecken positioniert werden kann. Zweite Förderstrecke ist hier im Sinne von einer der bestehenden Förderstrecken zu verstehen, so dass drei oder mehr Förderstrecken nebeneinander angeordnet sein können. Durch die Positionierung der weiteren Förderstrecke wird die zweite Außenseite semantisch korrekterweise zwar auch zu einer Innenseite, soll im Folgenden aber der Einfachheit halber dennoch weiterhin als zweite Außenseite bezeichnet werden. Der weitere Überführbereich kann mit dem existierenden Überführbereich gänzlich, teilweise oder gar nicht übereinstimmen. Wie die erste bzw. zweite Förderstrecke kann auch die weitere Förderstrecke mit weiteren Außenschwenkabweisern ausgestattet werden, wobei die Funktionalitäten der Schwenkabweiser der zweiten und der weiteren Förderstrecke überlappen können - der weitere Mittelschwenkabweiser kann als zweiter Außenschwenkabweiser agieren etc. Für die entsprechenden weiteren Schwenkabweiser, Schwenkachsen und Elemente gilt im Wesentlichen dasselbe wie für die entsprechenden Elemente der zuvor eingeführten ersten und zweiten Förderstrecke.

Für ein kontrolliertes Zu- und Abführen der Stückgüter, kann die Überführvorrichtung einen oder mehrere Förderbereiche umfassen, die auf einer oder mehreren der Förderstrecken vor und/oder hinter dem Überführbereich angeordnet sind und mit einer jeweils individuellen und einstellbaren Fördergeschwindigkeit antreibbar sind. Auf diese Weise kann der Stückgutstrom gesteuert werden (Abstände zwischen einander nachfolgenden Stückgütern, schonende Geschwindigkeitsänderungen, ...). Zudem kann die Überführvorrichtung mindestens eine Detektionsvorrichtung umfassen, die den Stückgutstrom zumindest im und/oder vor und/oder nach dem Überführbereich detektiert, wobei eine Ansteuerung der Schwenkvorrichtung und/oder der Förderbereiche in Abhängigkeit von dem detektierten Stückgutstrom erfolgt.

Hinsichtlich eines Verfahrens wird die vorstehend genannte Aufgabe gelöst durch ein Verfahren zum gezielten Überführen eines Stückguts von einer ersten auf eine zweite Förderstrecke mit einer ersten und einer zweiten Förderrichtung, einer ersten und einer zweiten Innenseite und einer ersten und einer zweite Außenseite. Das Verfahren umfasst die Verfahrensschritte: Transport eines Stückguts auf der ersten oder zweiten Förderstrecke entlang der ersten oder zweiten Förderrichtung hin zu dem Überführbereich, wobei die Förderstrecken in dem Überführbereich nebeneinander mit im Wesentlichen zueinander parallelen Förderrichtungen und durch einen zwischen ihren Innenseiten angeordneten Mittelstreifen voneinander getrennt angeordnet sind. Schwenken eines oder mehrerer Schwenkabweiser um eine jeweilige eigene, seitlich von einer der Förderstrecken angeordneter Schwenkachse herum zwischen einer ersten Überführstellung, einer Durchgangsstellung und einer zweiten Überführstellung. In der ersten bzw. zweiten Überführstellung versperren einer oder mehrere der Schwenkabweiser die erste bzw. zweite Förderstrecke im Überführbereich durch eine Anordnung quer zur Förderrichtung oder schräg zwischen der ersten bzw. zweiten Außenseite in Förderrichtung hin zum Mittelstreifen, so dass in der ersten bzw. zweiten Überführstellung Stückgüter im Wesentlichen auf gleicher Höhe der Förderstrecken wahlweise von der ersten auf die zweite Förderstrecke bzw. von der zweiten auf die erste Förderstrecke überführt werden. In der Durchgangsstellung sind einer oder mehrere der Schwenkabweiser parallel zum Mittelstreifen angeordnet, so dass keine Beeinflussung des Stückguts auf den Förderstrecken durch den oder die Schwenkabweiser erfolgt. Weiterer Transport des Stückguts durch den Überführbereich hindurch und auf einer der Förderstrecken weiter flussabwärts.

Das Verfahren weist, soweit übertragbar, die gleichen Eigenschaften und Vorteile auf, welche bezüglich des vorgestellten Verfahrens aufgeführt sind.

Gemäß einer Ausführungsform können der oder die Schwenkabweiser jeweils ein distales und ein proximales Ende aufweisen und ausgestaltet sein als ein Mittelschwenkabweiser und/oder als ein oder zwei Außenschwenkabweiser. Der Mittelschwenkabweiser kann um sein proximales Ende um seine auf dem und im Wesentlichen orthogonal zum Mittelstreifen angeordnete Mittelschwenkachse herum schwenkbar sein. Der oder die Außenschwenkabweiser können um ihre proximalen Enden um ihre auf der und im Wesentlichen orthogonal zur jeweiligen Außenseite angeordnete Außenschwenkachse herum schwenkbar sein. Die Außenschwenkachsen können flussaufwärts oder auf gleicher Höhe von der Mittelschwenkachse angeordnet sein.; Das distale Ende von mindestens einem der Schwenkabweiser kann in der ersten bzw. zweiten Überführstellung in die erste bzw. zweite Förderstrecke hinein geschwenkt werden und in der Durchgangsstellung kann mindestens einer der Schwenkabweiser parallel zum Mittelstreifen angeordnet werden, so dass in der ersten bzw. zweiten Überführstellung ein Stückgut durch die Schwenkabweiser in dem Überführbereich von der ersten auf die zweite Förderstrecke bzw. von der zweiten auf die erste Förderstrecke überführt wird. Es kann ein gezieltes im Wesentlichen gleichzeitiges Schwenken des oder der Außenschwenkabweiser und/oder des Mittelschwenkabweiser erfolgen wahlweise in die Überführstellungen und in die Durchgangsstellung.

Jede Förderstrecke weist einen oder mehrere eigene Außenschwenkabweiser auf. Die Außenseitenschwenkachsen sind nicht notwendigerweise auf gleicher Höhe angeordnet.

Das Verfahren kann gemäß einer weiteren Ausführungsform zudem den Verfahrensschritt Mitlaufen oder aktives Antreiben eines auf dem Mittelstreifen im Überführbereich in der Förderfläche angeordneten Fördermittels umfassen, so dass das Überführen eines Stückguts zwischen den Förderstrecken erleichtert wird.

Gemäß einer weiteren Ausführungsform kann das Verfahren zudem die Verfahrensschritte umfassen: Transport eines Stückguts auf der zweiten oder einer weiteren Förderstrecke, wobei die weitere Förderstrecke eine weitere Förderrichtung, eine weitere Innenseite und eine weitere Außenseite aufweist und in einem weiteren Überführbereich die weitere Förderstrecke neben der zweiten Förderstrecke und durch einen zwischen der zweiten Außenseite und der weiteren Innenseite angeordneten weiteren Mittelstreifen voneinander getrennt angeordnet ist und die zweite und die weitere Förderstrecke im Überführbereich im Wesentlichen zueinander parallele Förderrichtungen aufweisen. Schwenken eines oder mehrerer der weiteren Schwenkabweiser um eine weitere, seitlich von der weiteren Förderstrecke angeordneten Schwenkachse herum in mindestens eine weitere Überführstellung, gemäß einer Ausführungsform zwei weitere Überführstellungen, oder eine Durchgangsstellung, wobei der oder die weiteren Schwenkabweiser in der oder den weiteren Überführstellungen die zweite oder die weitere Förderstrecke versperren durch eine Anordnung quer zur Förderrichtung oder in Förderrichtung schräg zwischen der zweiten Innenseite bzw. weiteren Außenseite hin zum weiteren Mittelstreifen und in der Durchgangsstellung der oder die weiteren Schwenkabweiser entlang dem weiteren Mittelstreifen angeordnet sind, wobei in der zweiten weiteren bzw. weiteren Überführstellung die Schwenkabweiser im Wesentlichen auf gleicher Höhe angeordnet sind, so dass Stückgüter auf gleicher Höhe wahlweise von der zweiten auf die weitere Förderstrecke bzw. von der weiteren auf die zweite Förderstrecke überführt werden. Weiterer Transport des Stückguts durch den weiteren Überführbereich hindurch und auf einer der Förderstrecken weiter flussabwärts.

Gemäß einer weiteren Ausführungsform kann das Verfahren zudem den Verfahrensschritt Ansteuern von auf den Förderstrecken entlang den Förderrichtungen flussaufwärts und/oder flussabwärts vor und/oder hinter dem Überführbereich angeordneten Förderbereichen mit jeweils individuell einstellbaren Fördergeschwindigkeiten umfassen.

Ausführungsformen der Erfindung werden nachfolgend anhand der Figuren beispielsweise näher erläutert. Dabei zeigen:
- Figur 1: eine Überführvorrichtung des Stands der Technik;
- Figur 2: Durchgangs- und Überführstellungen bei einteiligem Schwenkabweiser;
- Figur 3: Durchgangs- und Überführstellungen mit Außenschwenkabweisern;
- Figur 4: eine Überführvorrichtung mit drei Förderstrecken;
- Figur 5: eine Überführvorrichtung mit einer Überführhilfe;
- Figur 6: Überführstellungen mit zwei Außenschwenkabweisern.

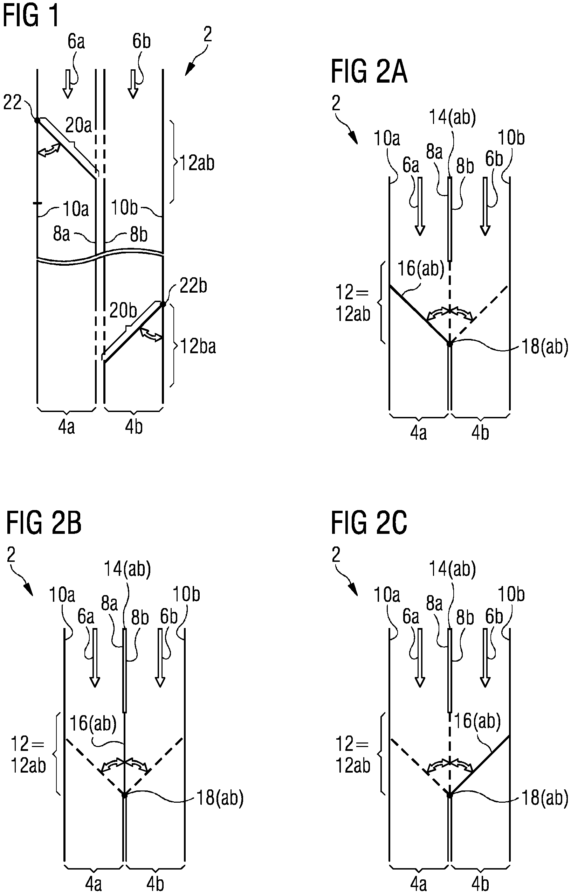

Figur 1 zeigt eine verbreitete Überführvorrichtung 2 umfassend zwei benachbarte und parallel zueinander angeordnete Förderstrecken 4a,4b mit eigenen Förderrichtungen 6a,6b. Das Überführen eines Stückguts von der ersten auf die zweite Förderstrecke 4a,4b wird durch Ausschwenken eines ersten Außenschwenkabweisers 20a mit seinem proximalen Ende um eine Außenschwenkachse 20 herum mit seinem distalen Ende hin zur Innenseite 8a erzielt. Das Abschneiden des Förderwegs 4a des Stückguts im Überführbereich 12ab führt dazu, dass der Außenschwenkabweiser 20a das Stückgut ablenkt und so auf die zweite Förderstrecke 6b überführt. Wenn keine Ablenkung des Stückgutstroms von der ersten auf die zweiten Förderstrecke 4a,4b erfolgen soll, wird der Schwenkabweiser 20a entlang der Außenseite 10a positioniert. Im oberen Überführbereich 12ab ist nur ein Linienwechsel von der ersten auf die zweite Förderstrecke 4a,4b möglich. Im unteren Überführbereich 12ba ist nur ein Linienwechsel von der zweiten auf die erste Förderstrecke 4b,4a möglich, die Funktionsweise ist analog. Es ist nicht möglich, in einem der Überführbereiche 12ab,12ba eine Kreuzungsfunktionalität zu erzielen.

Figur 2 zeigt eine erfindungsgemäße Überführvorrichtung 2 in erster Überführstellung (Figur 2a), Durchgangsstellung (Figur 2b) und zweiter Überführstellung (Figur 2c). Die Überführvorrichtung 2 umfasst eine erste und eine zweite Förderstrecke 4a,4b jeweils mit einer ersten und einer zweiten Förderrichtung 6a,6a, einer ersten und einer zweiten Innenseite 8a,8b und einer ersten und einer zweite Außenseite 10a, 0b, wobei die Förderstrecken 4a,4b in einem Überführbereich 12ab,12 nebeneinander mit im Wesentlichen zueinander parallelen und somit übereinstimmenden Förderrichtungen 6a,6b und durch einen zwischen ihren Innenseiten 8a,8b angeordneten Mittelstreifen 14,14ab voneinander getrennt angeordnet sind. Der Mittelstreifen 14 zwischen zwei Förderstrecken 4 kann mit oder ohne vertikale Abtrennung, im Sinne einer Mittellinie linienartig sein, so dass die Förderstrecken 4a,4b ohne Abstand direkt aneinander angrenzen, oder eine geringe Breite aufweisen, so dass die direkt benachbarten Förderstrecken 4 einander nicht berühren.

Ein Mittelschwenkabweiser 16,16ab ist um sein proximales Ende um eine auf dem und im Wesentlichen orthogonal zum Mittelstreifen 14 angeordnete Mittelschwenkachse 18,18ab herum zwischen der ersten und zweiten Überführstellung und der Durchgangsstellung schwenkbar. Das distale Ende des Mittelschwenkabweisers 16 ist in der ersten bzw. zweiten Überführstellung hin zur ersten bzw. zweiten Außenseite 10a,10b in die erste bzw. zweite Förderstrecke 4a,4b hinein positioniert. In der Durchgangsstellung ist der Mittelschwenkabweiser 16 entlang dem Mittelstreifen 14,14ab positioniert, der Transportweg des Stückguts wird im Überführbereich nicht durch den Mittelschwenkabweiser 16 beeinflusst.

Schwenkabweiser 16,20 beschreibt sowohl einen einzigen, einteiligen Mittelschwenkabweiser 16 für sich, als auch eine mehrteilige, den Mittelschwenkabweiser 16 umfassende oder den Mittelschwenkabweiser 16 nicht umfassende Vorrichtung zum Ablenken bzw. Überführen eines Stückguts von einer (abgebenden) auf eine andere (aufnehmende) Förderstrecke 4a,4b. Das erfindungsgemäße Überführen bezeichnet einen in beide Richtungen auf im Wesentlichen gleicher Höhe der Förderstrecken 4a,4b möglichen Linien-/Spurwechsel eines Stückgut(stroms).

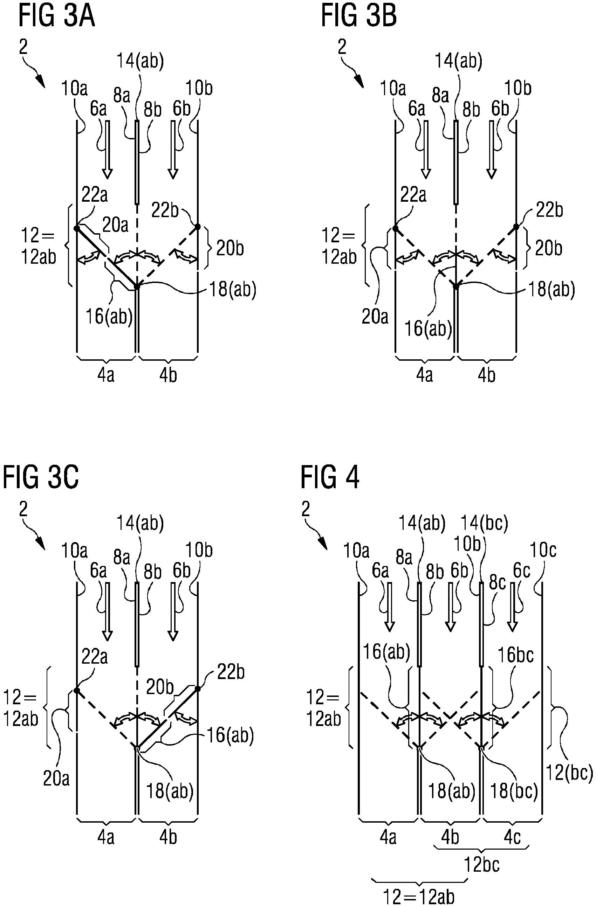

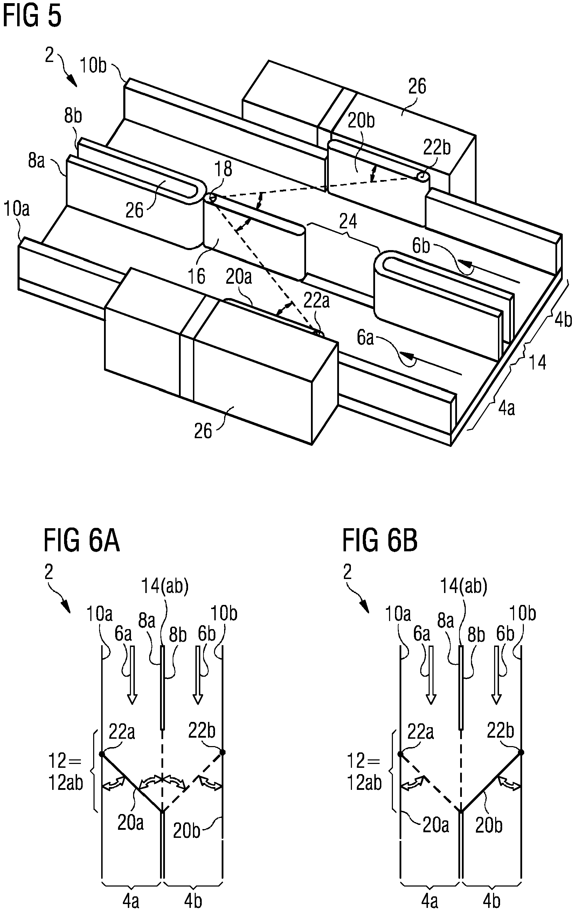

Die Mittelschwenkachse 18 ist in der Überführstellung bezogen auf die Förderrichtung 6 der abgebenden Förderstrecke 4 flussabwärts angeordnet, das distale Ende des Mittelschwenkabweisers 16 flussabwärts. Wenn die abgebende Förderstrecke 4 die erste Förderstrecke 4a (zweite Förderstrecke 4b) ist, wird dies als erste Überführstellung (zweite Überführstellung) bezeichnet. Wenn die Überführvorrichtung 2 zwei oder mehr Schwenkabweiser 16,20 (Figur 3+6: zwei Außenschwenkabweiser 20) umfasst, kann auch unterschieden werden zwischen einer ersten respektive zweiten Durchgangsstellung, bei welcher keine Beeinflussung des Stückguts auf der ersten respektive zweiten Förderstrecke 4a,4b erfolgt.

Der beliebig schmale oder breite Mittelstreifen 14 kann mit oder ohne bauliche Abgrenzung zwischen den Förderstrecken 4a,4b ausgestaltet sein. Sowohl die Höhe einer baulichen Abgrenzung auf dem Mittelstreifen 14, als auch die Höhe der Schwenkabweiser 16,20 wird an die Stückgutgröße, an die Fördergeschwindigkeit und an die Fragilität der zu überführenden Stückgüter angepasst ausgewählt.

In den Figuren stimmen die Schwenkwinkel - derjenige Winkel, den der entsprechende Schwenkabweiser 16,20 zwischen Durchgangs- und Überführstellung überstreicht, die Breite der Förderstrecken 4a,4b und somit auch die Länge der Schwenkabweiser 16,20 im Wesentlichen überein. Die Schwenkwinkel der einzelnen Förderstrecken 4a,4b und Schwenkabweiser 16,20, Längen der Schwenkabweiser 16,20 und Breiten der Förderstrecken 4a,4b können jedoch auch voneinander abweichen.

In Figur 2 ist die Länge des Mittelschwenkabweisers 16 so gewählt, dass in der Durchgangsstellung der Mittelschwenkabweiser 16 den Mittelstreifen 14 im gesamten Überführbereich 12 abdeckt und die Förderstrecken 4a,4b physisch abtrennt. Der Mittelschwenkabweiser 16 kann auch kürzer sein, denn da zwischen den Förderstrecken 4a,4b auf gleicher Flusshöhe kein Gefälle besteht, ist ein versehentlicher Spurwechsel auch ohne physische Abtrennung unwahrscheinlich.

In den Überführstellungen versperrt der Mittelschwenkabweiser 16 den Transportweg eines Stückgutstroms entlang der Förderrichtung 6a,6b seiner Förderstrecke 4a,4b und lenkt diesen auf die andere Förderstrecke 6b,6a ab. Genau der gleiche Mittelschwenkabweiser 16 lenkt Stückgüter auf beiden Förderstrecken 4a,4b ab, es sind keine zwei separaten Schwenkabweiser 16,20 erforderlich. Der Mittelschwenkabweiser 16 trennt im Überführungsbereich 12 die Förderstrecken 4a,4b voneinander ab (Durchgangsstellung) oder wird in der ersten bzw. zweiten Überführstellung in die erste bzw. zweite Förderstrecke 4a,4b hineingeschwenkt und lenkt den Stückgutstrom ab wahlweise von der ersten auf die zweite Förderstrecke 4a,4b bzw. umgekehrt.

Eine Schwenkvorrichtung 26 schwenkt den Schwenkabweiser 16. Je länger der Schwenkabweiser 16 ist, umso stärkere Motoren sind erforderlich. Umso schneller die Fördergeschwindigkeit und umso geringer der Abstand zwischen Stückgütern mit unterschiedlicher Zieltrajektorie, umso rascher muss geschwenkt werden. Die Überführvorrichtung 2 kann sowohl zum Sortieren als auch zum gesamthaften Überführen eines Stückgutstroms herangezogen werden. Sortieren (einander nachfolgende Stückgüter werden wahlweise von einer der beiden Förderstrecken 4a,4b auf die erste oder zweite Förderstrecke 4a,4b abgelenkt) ist mit häufigen Schwenkabweiserstellungsänderungen verbunden, so dass für einen hohen Durchsatz rasche Schwenkgeschwindigkeiten erforderlich sind. Beim gesamthaften Überführen eines Stückgutstroms erfolgen Stellungsänderungen der Schwenkabweiser 16,20 nur, nachdem viele einander nachfolgende Stückgüter gemäß ihrer Zielvorgabe überführt oder geradeaus gefordert worden sind, haben geringe Schwenkgeschwindigkeiten keinen so großen Einfluss auf den Durchsatz.

Da der Mittelschwenkabweiser 16 zwischen drei Stellungen (zwei Stellungen beim Stand der Technik - Figur 1) geschwenkt wird, ist eine Feinansteuerung durch die Schwenkvorrichtung 26 erforderlich, insbesondere, da es keinen, das Überführen vereinfachenden Höhenversatz in Überführrichtung gibt. Die Schwenkvorrichtung 26 muss den Mittelschwenkabweiser 16 sowohl beschleunigen als auch kontrolliert abbremsen können. Auch die mechanische Stabilität insbesondere des Mittelschwenkabweisers 16 muss gewährleistet sein.

Daher ist die Erfindung gut geeignet für Redundanzfunktionen mehrerer Förderstrecken 4 (Umleiten bei Störung in einem Bereich vor oder nach der Auskreuzung im Überführbereich 12) und für Lastverteilung (Ausgleich ungleichmäßig verteilter Last zwischen mindestens zwei Förderstrecken 4 werden). Das kann der Fall sein z. B. bei einem Förderstrom vom Check-In zu Röntgengeräten, auf einen Sorter, oder auf langen Strecken in einem Tunnel.

Figur 3 zeigt einen mehrteiligen Schwenkabweiser 16,20 in erster Überführstellung (Figur 3a), Durchgangsstellung (Figur 3b) und zweiter Überführstellung (Figur 3c) mit analogem Funktionsprinzip wie in Figur 2. Durch die flügelartige Ausgestaltung der Schwenkabweiser 16,20 sind diese im Vergleich zu Figur 2 kürzer und weniger starke Motoren können verwendet werden. Die Schwenkvorrichtung 26 steuert die vom Schwenkabweiser 16,20 umfassten Teile konzertiert und im Wesentlichen gleichzeitig an. Um die Förderstrecken 4a,4b in den Überführstellungen abzusperren, werden jeweils der Mittelschwenkabweiser 16(ab) und ein zur jeweiligen Förderstrecke 4a,4b gehörige Außenschwenkabweiser 20a,20b flügelartig in die jeweiligen Überführstellungen geschwenkt. Der Mittelschwenkabweiser 16 und der entsprechende Außenschwenkabweiser 20a,20b sind in den Überführstellungen im Wesentlichen kollinear bzw. koplanar angeordnet. Dies umfasst auch eine leichte Überlappung der distalen Enden der Schwenkabweiser 16,20. Die Außenschwenkabweiser 20a,20b sind jeweils um ihre proximalen Enden um eine jeweilige auf der und im Wesentlichen orthogonal zur jeweiligen Außenseite 10a,10b angeordnete Außenschwenkachse 22a,22b herum zwischen der Überführstellung ihrer Förderstrecken 4a,4b und der Durchgangsstellung schwenkbar ist. Das distale Ende des jeweiligen Außenschwenkabweisers 20a,20b weist in seiner jeweiligen Überführstellung hin zum Mittelstreifen 14 in seine Förderstrecke 4a,4b hinein. Und das distale Ende des Außenschwenkabweisers 20a,20b ist in der Durchgangsstellung entlang der Außenseite 10a,10b positioniert, so dass in der ersten bzw. zweiten Überführstellung ein Stückgut sowohl durch den Mittelschwenkabweiser 16 als auch durch den ersten bzw. zweiten Außenschwenkabweiser 20a,20b überführt bzw. abgelenkt wird.

Die Mittelschwenkachse 18 ist stromabwärts von den Außenschwenkachsen 22a,22b angeordnet. Und bei übereinstimmenden Längen der Schwenkabweiser 16,20 und übereinstimmenden Breiten der Förderstrecken 4a,4b sind die Außenschwenkachsen im Wesentlichen auf gleicher Höhe angeordnet. Die Breite der Förderstrecken 4a,4b und die Längen der Schwenkabweiser 16,20 können sich auch unterscheiden. Durch die geringere Masse und kürzere Länge sind mit einem mehrteiligen Schwenkabweiser 16,20 schnellere Schwenkzeiten als mit einem einteiligen Schwenkabweiser 16,20 möglich. Der einteilige Mittelschwenkabweiser 16ab trennt in der Durchgangsstellung den Mittelstreifen 14 im Überführbereich 12ab nicht vollständig ab.

In den gezeigten Ausführungsformen der der ersten bzw. zweiten Überführstellung versperren der oder die Schwenkabweiser 16,20 die erste bzw. zweite Förderstrecke 4a,4b im Überführbereich und sind schräg zwischen der ersten bzw. zweiten Außenseite 10a,10b in Förderrichtung 6 hin zum Mittelstreifen 14ab angeordnet. Aber auch eine Anordnung der Schwenkabweiser 16,20 quer zur Förderrichtung 6 ist möglich.

Figur 4 zeigt gemäß einer weiteren Ausführungsform eine drei Förderstrecken 4a,4b,4c umfassende Überführvorrichtung 2 mit zwei Mittelschwenkabweisern 16ab bzw. 16bc zwischen der ersten und zweiten Förderstrecke 4a,4b bzw. der zweiten und weiteren/dritten Förderstrecke 4b,4c. Der Übersichtlichkeit zuliebe wurden keine mit analoger Funktionalität und Ausgestaltung realisierbaren Ausführungsformen mit Außenschwenkabweisern 20 wie in Figur 3, 6+7 gezeigt. Figur 4 zeigt auf gleicher Höhe angeordnete Überführbereiche 12ab,12bc, die prinzipiell aber auch auf unterschiedlicher Höhe und gar nicht oder nur teilweise überlappend angeordnet werden können. Die Ausgestaltung von Figur 4 ermöglicht es, zugleich Stückgüter von der ersten und dritten/weiteren Förderstrecke 4a,4c auf die zweite Förderstrecke 4b zu überführen. Hierzu müssen der Mittelschwenkabweiser 16ab hin zur ersten Außenseite 10a in die erste Förderstrecke 4a hinein (erste Überführstellung) und der weitere Mittelschwenkabweiser 16bc hin zur dritten Außenseite 10c in die dritte Förderstrecke 4c (dritte/weitere Überführstellung) hinein geschwenkt werden. Auch andere simultane Linienwechsel sind möglich. So kann der Mittelschwenkabweiser 16ab in die erste Förderstrecke 4a und der weitere Mittelschwenkabweiser 16bc in die zweite Förderstrecke 4b hinein geschwenkt werden für einen simultanen Spurwechsel von der ersten auf die zweite Förderstrecke 4a,4b und von der zweiten auf die weitere Förderstrecke 4b,4c.

Vielfältige Spurwechsel können durchgeführt werden, dazu können mehrteilige Schwenkabweiser 16,20 vorteilhaft sein, so dass sich zwischen den Förderstrecken 4 die Funktionalitäten der Mittel- und Außenschwenkabweiser 16,20 vermischen können. Prinzipiell können beliebig viele Förderstrecken 4 und ihre Überführbereiche 12 nebeneinander angeordnet werden.

Figur 5 zeigt eine weitere Ausgestaltung, ähnlich Figur 3b. Im Überführbereich 12 ist auf dem Mittelstreifen 14 eine Überführhilfe 24 angeordnet für eine Unterstützung der reibungslosen Ablenkung durch die Schwenkabweiser 16,20a,20b. Als Überführhilfe 24 zwischen den Förderern 4a,4b können einzeln oder untereinander kombiniert ein Gleitblech, passive Fördermittel 24 (ein oder mehrere passive Transportrollen o.ä.) oder aktive Fördermitteln 24, die je nach Überführrichtung (d.h. abhängig von der Stellung der Schwenkachsen 16,20) in beide Richtungen von der Schwenkvorrichtung 26 angetrieben werden.

Die ansteuerbare Antriebe, beispielsweise Servoantriebe, umfassende Schwenkvorrichtung 26 ist jeweils nahe an oder in den Schwenkabweisern 16,20a,20b positioniert und schwenkt die Schwenkabweiser 16,20a,20b im Wesentlichen gleichzeitig, um konzertierte und koordinierte Wechsel zwischen den Überführstellungen und der Durchgangsstellung zu erreichen.

Abhängig von den Leistungsanforderungen ist der Schwenkabweiser 16,20 einteilig ist, umfasst nur den Mittelschwenkabweiser 16 oder zusätzlich auch Außenschwenkabweiser 20a,20b.

Allen Ausgestaltungen ist gemeinsam, dass ein Stückgut zunächst auf dem abgebenden Förderer 4 entlang dessen Förderrichtung 6 hin zu einem Überführbereich 12 transportiert wird. Jede der Förderstrecken 4a,4b,4c kann als abgebender Förderer 4 agieren. Der oder die Schwenkabweiser 16,20 ändern durch Schwenken ihre Stellung (Überführ- bzw. Durchgangsstellung) oder verbleiben in ihrer bereits eingestellten Stellung. Um ein Stückgut zu überführen werden die Schwenkabweiser 16,20 in den abgebenden Förderer 4 hinein geschwenkt, wobei das distale Ende des Mittelschwenkabweisers 16 in der Überführstellung des abgebenden Förderers 4 hin zu dessen Außenseite 10 zeigt. Das Stückgut wird vom Schwenkabweiser 16 abgelenkt und somit auf die aufnehmende Förderstrecke 4 überführt. Dort erfolgt dann ein Weitertransport entlang der Transportrichtung 6 des aufnehmenden Förderers.

Das Überführen funktioniert aufgrund der geometrischen Anordnung der Schwenkabweiser 16,20 in den Überführstellungen, wenn nur die Förderstrecken 4 aktiv angetrieben werden. Das Überführen kann unterstützt werden durch Antreiben der hierzu mit einem Fördermittel (beispielsweise ein umlaufendes Förderband) ausgestatteten Ablenkflächen der Schwenkabweiser 16,20. Das Überführen kann unterstützt werden durch passives Mitlaufen oder aktives Antreiben eines auf dem Mittelstreifen 14 im Überführbereich 12 in der Förderfläche angeordneten Fördermittels 24 (Überführhilfe).

Um Geschwindigkeit und Abstand der Stückgüter im Überführbereich 12 zu steuern, können vor und/oder nach dem Überführbereich 12 die Förderstrecken 4a,4b entlang der Förderrichtungen 6a,6b hintereinander angeordnete, ansteuerbare Förderbereiche (hintereinandergeschaltete Taktbänder) mit individuell ansteuerbaren Geschwindigkeiten aufweisen, um Stückgüter sequenziell zu beschleunigen und abzubremsen. Die Überführvorrichtung 2 umfasst gemäß einer Ausführungsform Detektionsmittel, beispielsweise Lichtschranken und/oder Kameras, um den Zufluss der Stückgüter zu detektieren und in Abhängigkeit von der Detektion die Überführvorrichtung 2 anzusteuern.

Die erfindungsgemäße Überführvorrichtung 2 erfordert nur halb so viel Platz wie die konventionelle Lösung, ist daher sehr flexibel. Auch werden außerhalb des Überführbereichs 12 erforderliche Komponenten nur einfach und nicht doppelt benötigt, so dass die Lösung günstiger ist. Diese Kompaktheit erlaubt neue Förderanlagenlayouts. Die Überführvorrichtung 2 kann zugleich als Vereinzelungsvorrichtung und Merger agieren, abhängig von der gewünschten Sortierrichtung. Diese Funktionen sind wechselseitig umschaltbar. Die Förderstrecken 4a,4b können je nach Positionierung der Schwenkabweiser ihre Funktionen (abgebender bzw. aufnehmender Förderer 4a,4b) tauschen. Dies ist bei Auskreuzungen nützlich.

Figur 6 zeigt eine Überführvorrichtung 2 mit zwei Außenschwenkabweisern 20a,20b, aber ohne Mittelschwenkabweiser 16. Zwar sind so zwei Motoren für das Schwenken erforderlich, allerdings können diese einfach am Rand der Förderstrecken 4a,4b positioniert werden, was Einbau und Wartung vereinfacht. Zudem müssen für jeden der Schwenkabweiser 20a,20b nur zwei Stellungen eingestellt werden und nicht drei wie bei einem Mittelschwenkabweiser 16 (Figur 2).

## Patentansprüche

1. Überführvorrichtung (2) umfassend
a) eine erste und eine zweite Förderstrecke (4a,4b) jeweils mit einer ersten und einer zweiten Förderrichtung (6a,6b), einer ersten und einer zweiten Innenseite (8a,8b) und einer ersten und zweiten Außenseite (10a,10b), wobei die Förderstrecken (4a,4b) in einem Überführbereich (12ab,12) nebeneinander mit im Wesentlichen zueinander parallelen Förderrichtungen (6a,6b) und durch einen zwischen ihren Innenseiten (8a,8b) angeordneten Mittelstreifen (14,14ab) voneinander getrennt angeordnet sind;
b) ein oder mehrere Schwenkabweiser (16,20) mit eigener, seitlich der ersten oder zweiten Förderstrecke (4a,4b) angeordneter Schwenkachse (16,20), um die herum der Schwenkabweiser (16,20) schwenkbar ist, wobei der oder die Schwenkabweiser (16,20) derart angeordnet und ansteuerbar sind, dass die Überführvorrichtung eine erste und eine zweite Überführstellung und eine Durchgangsstellung aufweist, wobei
- in der ersten bzw. zweiten Überführstellung einer oder mehrere der Schwenkabweiser (16,20) die erste bzw. zweite Förderstrecke (4a,4b) im Überführbereich versperren durch eine Anordnung quer zur Förderrichtung (6) oder schräg von der ersten bzw. zweiten Außenseite (10a,10b) in Förderrichtung (6) hin zum Mittelstreifen (14ab), so dass ein Stückgut von der ersten bzw. zweiten Förderstrecke (4a,4b) auf die zweite bzw. erste Förderstrecke (4b,4a) überführt wird, wobei in der ersten und zweiten Überführstellung die Schwenkabweiser (16,20) im Wesentlichen auf gleicher Höhe der Förderstrecken (4a,4a) angeordnet sind, so dass Stückgüter auf gleicher Höhe wahlweise von der ersten auf die zweite bzw. von der zweiten auf die erste Förderstrecke (4a,4b) überführbar sind;
- in der Durchgangsstellung einer oder mehrere der Schwenkabweiser (16,20) parallel zum Mittelstreifen (14) angeordnet sind, so dass keine Beeinflussung eines Stückguts auf der oder den Förderstrecken (4a,4b) erfolgt;
c) eine Schwenkvorrichtung (26) um den oder die Schwenkabweiser (20a,20b,16ab) in die Überführstellungen und in die Durchgangsstellung zu schwenken.

2. Überführvorrichtung (2) nach Anspruch 1, **dadurch gekennzeichnet, dass**
der oder die Schwenkabweiser (16,20) jeweils ein distales und ein proximales Ende aufweisen und ausgestaltet sind als ein Mittelschwenkabweiser (16,16ab) und/oder ein oder zwei Außenschwenkabweiser (20a,20b), wobei
a) der Mittelschwenkabweiser (16,16ab) um sein proximales Ende um seine auf dem und im Wesentlichen orthogonal zum Mittelstreifen (14,14ab) angeordnete Mittelschwenkachse (18,18ab) herum schwenkbar ist;
b) der oder die Außenschwenkabweiser (20a,20b) um ihre proximalen Enden um ihre auf der und im Wesentlichen orthogonal zur jeweiligen Außenseite (10a,10b) angeordnete Außenschwenkachse (22a,22b) herum schwenkbar sind;
c) die Außenschwenkachsen (22a,22b) flussaufwärts oder auf gleicher Höhe von der Mittelschwenkachse (18,18ab) angeordnet sind;
d) das distale Ende von mindestens einem der Schwenkabweiser (20a,20b,16ab) in der ersten bzw. zweiten Überführstellung in die erste bzw. zweite Förderstrecke (4a,4b) hinein und in der Durchgangsstellung mindestens einer der Schwenkabweiser (20a,20b,16ab) parallel zum Mittelstreifen (14,14ab) positioniert ist, so dass in der ersten bzw. zweiten Überführstellung ein Stückgut durch den oder die Schwenkabweiser (20a,20b,16) in dem Überführbereich (12ab,12) von der ersten auf die zweite Förderstrecke (4a,4b) bzw. von der zweiten auf die erste Förderstrecke (4b,4a) überführt wird;
e) die Schwenkvorrichtung (26) ausgestaltet ist, den Außenschwenkabweiser (20a,20b) gezielt im Wesentlichen gleichzeitig mit dem Mittelschwenkabweiser (16,16ab) wahlweise in die Überführstellungen und in die Durchgangsstellung zu schwenken.

3. Überführvorrichtung (2) nach Anspruch 2, **dadurch gekennzeichnet, dass**
der Mittelschwenkabweiser (16,16ab) und der erste bzw. zweite Außenschwenkabweiser (20a,20b) in der ersten bzw. zweiten Überführstellung im Wesentlichen kollinear positioniert sind, so dass ein Stückgut sowohl durch den Mittelschwenkabweiser (16,16ab), als auch durch den Außenschwenkabweiser (20a,20b) von seiner Förderstrecke (4a,4b) auf die benachbarte Förderstrecke (4b,4a) überführt wird.

4. Überführvorrichtung (2) nach einem der vorangehenden Ansprüche, **dadurch gekennzeichnet, dass**
der oder die Schwenkabweiser (16,20) antreibbare Ablenkflächen aufweisen und die Schwenkvorrichtung (26) ausgestaltet ist, diese Ablenkflächen anzutreiben

5. Überführvorrichtung (2) nach einem der vorangehenden Ansprüche, **dadurch gekennzeichnet, dass**
die Förderstrecken (4a,4b) im Überführbereich (12,12ab) eine ebene oder eine nur entlang den Förderrichtungen (6a,6b) geneigte Förderfläche ausbilden.

6. Überführvorrichtung (2) nach einem der vorangehenden Ansprüche, zudem umfassend
ein auf dem Mittelstreifen (14,14ab) im Überführbereich (12,12ab) angeordnetes, aktiv antreibbares oder passives Fördermittel (24), welches ausgestaltet ist, das Überführen zwischen den Förderstrecken (4a,4b) zu erleichtern.

7. Überführvorrichtung (2) nach einem der vorangehenden Ansprüche, zudem umfassend
a) eine weitere Förderstrecke (4c) mit einer weiteren Förderrichtung (6c), einer weiteren Innenseite (8c) und einer weiteren Außenseite (10c), wobei die weitere Förderstrecke (4c) in einem weiteren Überführbereich (12bc) neben der zweiten Förderstrecke (4b) mit im Wesentlichen zueinander parallelen Förderrichtungen (6b,6c) und durch einen zwischen der zweiten Außenseite (10b) und der weiteren Innenseite (8c) angeordneten weiteren Mittelstreifen (14bc) voneinander getrennt angeordnet sind;
b) einen oder mehrere weitere Schwenkabweiser (16bc,20c) mit eigener, seitlich der weiteren Förderstrecke (4a,4b) angeordneter weiterer Schwenkachse (18bc,22c), um die herum der oder die weiteren Schwenkabweiser (16bc,20c) schwenkbar sind, wobei der oder die weiteren Schwenkabweiser (16bc,20c) derart angeordnet und ansteuerbar sind, dass die Überführvorrichtung (2) eine zweite weitere und/oder eine weitere Überführstellung aufweist, wobei
- in der zweite weiteren bzw. in der weiteren Überführstellung der eine oder mehrere weitere Schwenkabweiser (16bc,20c) die zweite bzw. die weitere Förderstrecke (4c) im weiteren Überführbereich (12) versperren durch eine Anordnung quer zur Förderrichtung (6) oder schräg zwischen der zweiten Innenseite (8b) bzw. der weiteren Außenseite (10c) in Förderrichtung (6) hin zum weiteren Mittelstreifen (14bc), so dass ein Stückgut von der zweiten bzw. weiteren Förderstrecke (4b,4c) auf die weitere bzw. zweite Förderstrecke (4c,4b) überführt wird, wobei in der zweiten weiteren und der weiteren Überführstellung die weiteren Schwenkabweiser (16bc,20c) im Wesentlichen auf gleicher Höhe der Förderstrecken (4b,4c) angeordnet sind, so dass Stückgüter auf gleicher Höhe wahlweise von der zweiten auf die weitere bzw. von der weiteren auf die zweite Förderstrecke überführbar sind;
- in der Durchgangsstellung einer oder mehrere der weiteren Schwenkabweiser (16bc,20c) parallel zum weiteren Mittelstreifen (14) angeordnet sind, so dass keine Beeinflussung eines Stückguts auf den Förderstrecken (4a,4b) erfolgt;
c) die Schwenkvorrichtung (26) ist ausgestaltet, den oder die weiteren Schwenkabweiser (16bc,20c) in die weiteren Überführstellungen und in die Durchgangsstellung zu schwenken.

8. Überführvorrichtung (2) nach einem der vorangehenden Ansprüche, zudem umfassend
ein oder mehrere Förderbereiche, die auf einer oder mehreren der Förderstrecken (4a,4b,4c) vor und/oder hinter dem Überführbereich (12,12ab,12bc) angeordnet sind und mit einer jeweils individuellen und einstellbaren Fördergeschwindigkeit antreibbar sind.

9. Verfahren zum gezielten Überführen eines Stückguts von einer ersten auf eine zweite Förderstrecke (4a,4b) mit einer ersten und einer zweiten Förderrichtung (6a,6b), einer ersten und einer zweiten Innenseite (8a,8b) und einer ersten und einer zweite Außenseite (10a,10b), umfassend die Verfahrensschritte
a) Transport eines Stückguts auf der ersten oder zweiten Förderstrecke (4a,4b) entlang der ersten oder zweiten Förderrichtung (6a,6b) hin zu dem Überführbereich (12), wobei die Förderstrecken (4a,4b) in dem Überführbereich (12) nebeneinander mit im Wesentlichen zueinander parallelen Förderrichtungen (6a,6b) und durch einen zwischen ihren Innenseiten (8a,8b) angeordneten Mittelstreifen (14,14ab) voneinander getrennt angeordnet sind;
b) Schwenken eines oder mehrerer Schwenkabweiser (16,20) um eine jeweilige eigene, seitlich von einer der Förderstrecken (4a,4b) angeordneter Schwenkachse (18,22) herum zwischen einer ersten Überführstellung, einer Durchgangsstellung und einer zweiten Überführstellung, wobei
- in der ersten bzw. zweiten Überführstellung einer oder mehrere der Schwenkabweiser (16,20) die erste bzw. zweite Förderstrecke (4a,4b) im Überführbereich versperren durch eine Anordnung quer zur Förderrichtung (6) oder schräg zwischen der ersten bzw. zweiten Außenseite (10a,10b) in Förderrichtung (6) hin zum Mittelstreifen (14ab), so dass in der ersten bzw. zweiten Überführstellung Stückgüter im Wesentlichen auf gleicher Höhe der Förderstrecken (4a,4a) wahlweise von der ersten auf die zweite Förderstrecke (4a,4b) bzw. von der zweiten auf die erste Förderstrecke (4b,4a) überführt werden;
- in der Durchgangsstellung einer oder mehrere der Schwenkabweiser (16,20) parallel zum Mittelstreifen (14) angeordnet sind, so dass keine Beeinflussung des Stückguts auf den Förderstrecken (4a,4b) durch den oder die Schwenkabweiser (16,16ab) erfolgt;
c) weiterer Transport des Stückguts durch den Überführbereich (12) hindurch und auf einer der Förderstrecken (4a,4b) weiter flussabwärts.

10. Verfahren nach Anspruch 9, **dadurch gekennzeichnet, dass** der oder die Schwenkabweiser (16,20) jeweils ein distales und ein proximales Ende aufweisen und ausgestaltet sind als ein Mittelschwenkabweiser (16,16ab) und/oder ein oder zwei Außenschwenkabweiser (20a,20b), wobei
a) der Mittelschwenkabweiser (16,16ab) um sein proximales Ende um seine auf dem und im Wesentlichen orthogonal zum Mittelstreifen (14,14ab) angeordnete Mittelschwenkachse (18,18ab) herum schwenkbar ist;
b) der oder die Außenschwenkabweiser (20a,20b) um ihre proximalen Enden um ihre auf der und im Wesentlichen orthogonal zur jeweiligen Außenseite (10a,10b) angeordnete Außenschwenkachse (22a,22b) herum schwenkbar sind;
c) der oder die Außenschwenkachsen (22a,22b) flussaufwärts oder auf gleicher Höhe von der Mittelschwenkachse (18,18ab) angeordnet sind;
d) das distale Ende von mindestens einem der Schwenkabweiser (20a,20b,16ab) wird in der ersten bzw. zweiten Überführstellung in die erste bzw. zweite Förderstrecke (4a,4b) hinein geschwenkt und in der Durchgangsstellung wird mindestens einer der Schwenkabweiser (20a,20b,16ab) parallel zum Mittelstreifen (14,14ab) angeordnet, so dass in der ersten bzw. zweiten Überführstellung ein Stückgut durch die Schwenkabweiser (20a,20b,16) in dem Überführbereich (12ab,12) von der ersten auf die zweite Förderstrecke (4a,4b) bzw. von der zweiten auf die erste Förderstrecke (4b,4a) überführt wird;
e) gezieltes im Wesentlichen gleichzeitiges Schwenken des oder der Außenschwenkabweiser (20a,20b) und/oder des Mittelschwenkabweiser (16,16ab) wahlweise in die Überführstellungen und in die Durchgangsstellung.

11. Verfahren nach einem der Ansprüche 9 bis 10, **dadurch gekennzeichnet, dass**
die Förderstrecken (4a,4b,4c) im Überführbereich (12,12ab,12bc) eine ebene oder eine nur entlang den Förderrichtungen (6a,6b,6c) geneigte Förderfläche ausbilden.

12. Verfahren nach einem der Ansprüche 9 bis 11, zudem umfassend den Verfahrensschritt
Antreiben von Ablenkflächen des oder der Schwenkabweiser (20,16) während der oder die Schwenkabweiser (20,16) in den Überführstellungen positioniert sind und/oder dorthin geschwenkt werden.

13. Verfahren nach einem der Ansprüche 9 bis 12, zudem umfassend den Verfahrensschritt
Mitlaufen oder aktives Antreiben eines auf dem Mittelstreifen (14,14ab) im Überführbereich (12) in der Förderfläche angeordneten Fördermittels (24), so dass das Überführen eines Stückguts zwischen den Förderstrecken (4a,4b) erleichtert wird.

14. Verfahren nach einem der Ansprüche 9 bis 13, zudem umfassend die Verfahrensschritte:
a) Transport eines Stückguts auf der zweiten oder einer weiteren Förderstrecke (4c), wobei die weitere Förderstrecke (4c) eine weitere Förderrichtung (6c), eine weitere Innenseite (8c) und eine weitere Außenseite (10c) aufweist und in einem weiteren Überführbereich die weitere Förderstrecke (4c) (12bc) neben der zweiten Förderstrecke (4b) und durch einen zwischen der zweiten Außenseite (10b) und der weiteren Innenseite (8c) angeordneten weiteren Mittelstreifen (14bc) voneinander getrennt angeordnet ist und die zweite und die weitere Förderstrecke im Überführbereich (12bc) im Wesentlichen zueinander parallele Förderrichtungen (6b 6c) aufweisen;
b) Schwenken eines oder mehrerer der weiteren Schwenkabweiser (16bc,20c) um eine weitere, seitlich von der weiteren Förderstrecke (4c) angeordneten Schwenkachse (18bc,22c) herum in mindestens eine weitere Überführstellung oder eine Durchgangsstellung, wobei der oder die weiteren Schwenkabweiser (16bc,20c) in der oder den weiteren Überführstellungen die zweite oder die weitere Förderstrecke (4b,4c) versperren durch eine Anordnung quer zur Förderrichtung (6c) oder in Förderrichtung (6c) schräg zwischen der zweiten Innenseite (8b) bzw. weiteren Außenseite (10c) hin zum weiteren Mittelstreifen (14bc) und in der Durchgangsstellung der oder die weiteren Schwenkabweiser (16bc,20c) entlang dem weiteren Mittelstreifen (14bc) angeordnet sind, wobei in der zweiten weiteren bzw. weiteren Überführstellung die Schwenkabweiser (16,20) im Wesentlichen auf gleicher Höhe angeordnet sind, so dass Stückgüter auf gleicher Höhe wahlweise von der zweiten auf die weitere Förderstrecke (4b,4c) bzw. von der weiteren auf die zweite Förderstrecke (4c,4b) überführt werden;
c) weiterer Transport des Stückguts durch den weiteren Überführbereich (12bc) hindurch und auf einer der Förderstrecken (4b,4c) weiter flussabwärts.

15. Verfahren nach einem der Ansprüche 9 bis 14, zudem umfassend den Verfahrensschritt
Ansteuern von auf den Förderstrecken (4a,4b,4c) entlang den Förderrichtungen (6a,6b,6c) flussaufwärts und/oder flussabwärts vor und/oder hinter dem Überführbereich (12,12ab,12bc) angeordneten Förderbereichen mit jeweils individuell einstellbaren Fördergeschwindigkeiten.
